# EUROPÄISCHE PATENTSCHRIFT

(11) **EP 1 211 479 B1**
(45) Veröffentlichungstag und Bekanntmachung des Hinweises auf die Patenterteilung: **05.11.2008**
(21) Anmeldenummer: 01126920.6
(22) Anmeldetag: 13.11.2001
(51) Int. Cl.: G01B 11/25, G01B 11/30

(54) **Verfahren zur Erkennung von Abweichungen der Oberflächenform von einer vorgegebenen Form**
Method for the detection of surface shape deviations with respect to a given shape
Procédé pour la détection des déviations de forme de surface par rapport à une forme donnée

(30) Priorität: 22.11.2000 DE 10057928
(43) Veröffentlichungstag der Anmeldung: 05.06.2002
(73) Patentinhaber: INB Vision AG, 39120 Magdeburg (DE)
(72) Erfinder: Michaelis, Bernd, Prof. Dr.-Ing. habil., 39175 Biederitz (DE); Albrecht, Peter, Dipl.-Ing., 39104 Magdeburg (DE); Lilienblum, Tilo, Dipl.-Ing., 39104 Magdeburg (DE)
(74) Vertreter: Leinung, Günter

(56) Entgegenhaltungen:
- LILIENBLUM T ET AL: "Dent detection in car bodies" , PATTERN RECOGNITION, 2000. PROCEEDINGS. 15TH INTERNATIONAL CONFERENCE ON SEPTEMBER 3-7, 2000, LOS ALAMITOS, CA, USA,IEEE COMPUT. SOC, US, PAGE(S) 775-778 XP010533193 ISBN: 0-7695-0750-6 * Seite 775 - Seite 776; Abbildungen 1,2 *
- LILIENBLUM T. ET AL:"Error detection of the surface formby 3-d measurement and neural networks". PROCEEDINGS OF IMDSP'98 10TH IMAGE AND MULTI-DIMENSIONAL DIGITAL SIGNAL PROCESSING WORKSHOP,ALPBACH,AUSTRIA,12-16 JULY 1998.ED. NIEMANN H. ET AL.PAGES 17-20 ISBN 3-89601-011-5 XP008013517
- LILIENBLUM T. ET AL: "Improvement of 3-d data with neural networks" JOURNAL OF MICROELECTRONIC SYSTEM INTEGRATION , Bd. 5, Nr. 1, März 1997 (1997-03), Seiten 53-64, XP008013516 USA
- PETER ALBRECHT; BERND MICHAELIS: "Improvement of the Spatial Resolution of an Optical 3-D Measurement Procedure" IEEE TRANSACTION ON INTRUMENTATION AND MEASUREMENT, Bd. 47, Nr. 1, 1. Februar 1998 (1998-02-01), Seiten 158-162, XP011024397

## Beschreibung

Die Erfindung betrifft ein Verfahren zur Erkennung von Fehlern der Oberflächenform eines Objektes, bei dem die durch eine digitale Kamera aufgenommenen Bilddaten der Oberfläche des zu prüfenden Objektes, nachfolgend als Prüfobjekt bezeichnet, mittels eines künstlichen neuronalen Netzes dahingehend modifiziert werden, dass digitale Bilddaten erzeugt werden, die von der digitalen Kamera vom Prüfobjekt erzeugt werden könnten, wenn es keine Oberflächenfehler hätte, virtuelles Masterteil. Das Masterteil entspricht somit einer vorgegebenen Form. Durch Vergleich der Originalbilddaten mit den künstlich erzeugten Bilddaten können die Fehlstellen der Oberfläche detektiert werden. Die Erfindung ist bevorzugt für solche Meßaufgaben einsetzbar, bei denen die Fehler im Vergleich zur Größe des Prüfobjektes sehr klein sind und das Prüfobjekt z. B. aus Gründen der Aufwandssenkung nur mit geringerer Genauigkeit in der Meßposition justiert werden kann. Derartige Meßaufgaben bestehen z.B. bei der Überwachung der Fertigung großflächiger tiefgezogener Blechteile.

Es ist ein Verfahren nach der DE 197 53 620.4 C1 bekannt, bei dem 3D-Meßdaten der Oberfläche des zu prüfenden Objektes mittels eines künstlichen neuronalen Netzes dahingehend modifiziert werden, dass 3D-Meßdaten erzeugt werden, die von dem Prüfobjekt stammen könnten, wenn es keine Oberflächenfehler hätte, virtuelles Masterteil. Durch Vergleich der Original-3D-Meßdaten mit den künstlich erzeugten 3D-Meßdaten können die Fehlstellen in der Oberfläche detektiert werden.

Nachteilig ist dabei, dass zur Detektierung von Fehlstellen in der Oberflächenform 3D-Daten bestimmt werden müssen, die explizit die Oberflächenform charakterisieren. Diese 3D-Daten werden häufig aus digitalen Bilddaten berechnet, die ebenfalls die Oberflächenform inclusive der Fehlstellen charakterisieren, allerdings implizit. Zur Detektion der Fehlstellen reicht aber bereits diese Form der Oberflächencharakteristik.

Der Aufwand zur Erzeugung der 3D-Meßdaten der Oberfläche des Prüfobjektes ist in der Regel höher als der Aufwand zur Aufnahme von Bilddaten. Häufig werden die 3D-Daten aus ähnlichen oder denselben Bildern berechnet, die bei der Erfindung direkt verwendet werden.

Zur Berechnung der 3D-Daten aus digitalen Bildern sind folgende Verfahren besonders gut geeignet: Verfahren nach DE 196 23 172 C1 ; Phasenshiftverfahren aus den Bildern zweier Kameras; Phasenshiftverfahren unter Verwendung von einer Kamera und einem Projektor.

Eine wichtige Voraussetzung bei der Berechnung von 3D-Daten mit einem der genannten Verfahren ist eine exakte Kalibrierung der beiden Kameras bzw. der Kamera und des Projektors beim Phasenshiftverfahren mit nur einer Kamera. Hierfür wird zusätzliche Software benötigt. Fehler bei der Kalibrierung führen außerdem in der Regel zu Verfälschungen der 3D-Daten.

Im Vergleich zu den Verfahren mit zwei Kameras wird zudem noch eine Kamera eingespart.

Derartige Verfahren werden in der Praxis genutzt zur automatisierten optischen 3-D-Qualitätskontrolle von Sichtteilen, beispielsweise zum Erkennen von Fehlern wie Beulen, Dellen, Pickeln und ähnlichen Schädigungen in Oberflächen von Automobilteilen.

Eine Methode der praktischen Umsetzung eines derartigen Verfahrens wird in einer Veröffentlichung "Dent Detection in Car Bodies" von Tilo Lilienblum et al. in "Proceedings 15th International Conference on Pattern Recognition, 2000"; Vol. 4, Seiten 775-778, beschrieben.

Der Erfindung liegt die Aufgabe zugrunde, ein Verfahren anzugeben, bei dem der Einfluss der Justierunterschiede sowie tolerierbarer Formvariationen des Prüfobjektes auf das Prüfungsergebnis weitgehend oder vollständig beseitigt wird, so daß mit geringem Justieraufwand unter Anwendung eines neuronalen Netzes auch kleine Fehler ohne explizite Berechnung von 3D-Daten des Prüfobjektes automatisch detektierbar sind. Typische Justierunterschiede und typische, tolerierbare Formvariationen sind dabei größer als die zu detektierenden Fehler.

Erfindungsgemäß wird die Aufgabe mit einem Verfahren mit den Merkmalen im Anspruchs 1 gelöst. Vorteilhafte Weiterbildungen ergeben sich aus den abhängigen Ansprüchen.

So sind mit geringem Justieraufwand auch kleine Fehler ohne explizite Berechnung von 3D-Daten des Prüfobjektes unter Anwendung eines neuronalen Netzes automatisch detektierbar. Typische Justierunterschiede und typische, tolerierbare Formvariationen sind dabei größer als die zu detektierenden Fehler.

Das vorgestellte Verfahren zur Erkennung von Abweichungen der Oberflächenform von einer vorgegebenen Form ist durch eine Messwerterfassung und eine nachfolgende Verarbeitung in einem künstlichen neuronalen Netz charakterisiert, in dem das Muster auf eine Objektoberfläche projiziert und Bilder mit Matrixkamera aufgenommen werden, wobei die Matrixkamera in an sich bekannter Weise einen Satz von n zeitlich aufeinanderfolenden Bildern erzeugt, wobei zwischen den Bildaufnahmen das projizierte Muster um vorgegebene Werte verschoben und/oder gedreht und/oder die Struktur des Musters verändert wird. Dabei werden bei den je n Grauwerten, einer Grauwertfolge, die einzelnen Pixel der von der Matrixkamera aufgenommenen N Bilder eine oder weinige <n Zahlen bestimmt, die charakteristisch für die Grauwertfolge des jeweiligen Pixels ist/sind oder für die Grauwertfolge des Pixels in Relation zu einer Grauwertfolge oder mehreren Grauwertfolgen anderer Pixel, wobei nach Eingabe der aufgenommenen Bilddaten oder der Matrix der aus den Bilddaten ermittelten charakteristischen Zahlen des Prüfobjektes in das neuronale Netz eines Recalls des neuronalen Netzes erfolgt, wobei als signifikante Daten für die Fehler des Prüfobjektes der Vergleich zwischen den Bilddaten oder der Matrix der aus den Bilddaten ermittelten charakterischen Zahlen des Prüfobjektes und den Recalldaten des neuronalen Netzes verwendet werden.

Mit nachfolgendem Ausführungsbeispiel wird die Erfindung näher erläutert.

Das grundsätzliche Problem bei der Bewertung eines Prüfteils bezüglich Fehlstellen in der Oberflächenform liegt in folgendem:

Es handelt sich in der Regel um industriell gefertigte Objekte, deren Formen produktionstechnisch bedingt variieren. Es liegen mathematische Beschreibungen der Oberfläche, z.B. CAD-Modelle, oder eine Reihe Masterteile vor, die als fehlerfrei befunden wurden. Neben den Formunterschieden variiert ebenfalls die Positionierung. Aus diesem Grund ist es nicht möglich, durch eine einfache Differenzbildung zwischen den Daten des Prüfteils und denen des entsprechenden Masterteiles die Fehlstellen zu extrahieren, da letztere Daten nicht vorliegen. Hauptbestandteil der Erfindung ist es, aus den Daten des Prüfteiles Daten des entsprechenden virtuellen Masterteiles zu berechnen (ein Teil ohne Fehler aber in gleicher Position, globaler Verformung und Ausführung wie das Prüfteil).

Dies erfolgt in der Recallphase eines künstlichen neuronalen Netzes. Ein für die erfindungsgemäße Aufgabe besonders geeignetes künstliches neuronales Netz ist ein modifizierter Assoziativspeicher entsprechend DE 197 53 620 C1. Seine aufgabenspezifische Konfiguration erhält er in einer Trainingsphase.

### Zur Recallphase:

Der Algorithmus zur Extraktion der Fehlstellen beginnt zunächst mit der Aufnahme von Bildern von der zu bewertenden Oberfläche, des Prüfteils, mit einer digitalen Kamera mit dem Ziel, dass in ihnen (implizite) 3D-Informationen der Oberfläche enthalten sind.

Hierzu werden unterstützend mit einem Projektor Muster auf die Oberfläche projiziert. Dabei werden nacheinander mehrere n unterschiedliche Muster projiziert und n Bilder aufgenommen. Dies ist eine günstige Vorgehensweise, um die Informationsmenge zu erhöhen. Die n Muster sind in der Regel Streifenmuster, die um den n-ten Teil der Streifenperiode verschoben werden. Möglich sind auch völlig andere, z.B. stochastische Muster, die sich untereinander in Form oder Lage unterscheiden.

In Regel ist es sinnvoll, die Helligkeitswerte der aufgenommenen Bilder zu normieren, da zwischen den verschiedenen Messungen die Lichtverhältnisse variieren können durch z.B. Helligkeitsänderungen des Projektors oder anderen Reflexionseigenschaften der zu vermessenden Teile. Eine typische Möglichkeit zur Helligkeitsnormierung der Bilder besteht in der Verwendung eines sogenannten Dunkel- und eines Hellbildes. Hierzu wird durch den Projektor ein völlig helles Muster projiziert und ein weiteres, bei dem die Lampe zwar leuchtet, aber der Projektionsweg auf die übliche, maximale Weise abgedunkelt wird, als würden ausschließlich "schwarze" Streifen projiziert werden. Für jedes Pixel liegt dann somit ein unterer und ein oberer Helligkeitswert vor, auf die die Grauwerte aller Pixel aus den n aufgenommenen Bildern in an sich bekannter Weise normiert werden, z.B. in Relation zur Differenz aus dem oberen und dem unteren Helligkeitswert. In der weiteren Beschreibung soll der Begriff "Bilder" auch die auf diese oder ähnliche Weise normierten Bilder umfassen.

Durch die zu bewertende Oberfläche erfolgt eine räumliche Verformung der Muster. Somit enthalten die aufgenommenen Bilder implizite 3D-Informationen über die Oberfläche. Dabei ist wesentliche Voraussetzung, dass die Kamera aus einer anderen Richtung Bilder aufnimmt als der Projektor Muster projiziert.Aus diesen Informationen werden in den Folgeschritten dann die Fehlstellen extrahiert.

Zunächst gibt es das Problem der hohen Informationsmenge: Es liegen n Bilder der Oberfläche vor. Daraus folgt, dass pro Pixel n Grauwerte und somit eine Grauwertfolge vorliegt. Diese hohe Informationsmenge könnte zu Schwierigkeiten bei der Bearbeitung durch den Assoziativspeicher führen.

Aus diesem Grund erscheint es sinnvoll, die Informationsmenge zu reduzieren. Hierzu wird die Grauwertfolge eines Pixels in eine charakteristische Zahl abgebildet. Dafür gibt es folgende Möglichkeiten:

So muss bei einer Möglichkeit zunächst gewährleistet werden, dass n Streifenmuster mit nahezu sinusförmigem Helligkeitsverlauf, senkrecht zu den Streifen projiziert werden.

Diese Muster haben die gleiche Form untereinander, sind aber um jeweils den n-ten Teil der Periode verschoben. Nun kann man bekannte Methoden des sogenannten Phasenshiftverfahrens verwenden:

Für jedes Pixel liegt im Ergebnis spezieller Berechnungen ein Phasenwert vor. Dieser ist ein Mass für die Position auf einem der Sinusmuster in Bezug zum Nulldurchgang der Sinusfunktion. Der Phasenwert ist eine charakteristische Zahl für die gesamte Grauwertfolge des Pixels.

Bei einer anderen Möglichkeit zur Berechnung einer charakteristischen Zahl wird die Ähnlichkeit der Grauwertfolge des ausgewählten Pixels zur Grauwertfolge eines Nachbarpixels bestimmt: Diese charakteristische Zahl ist dann z.B. der Kreuzkorrelationskoeffizient zwischen den beiden Grauwertfolgen. Zur Anwendung dieser Methode auf das ganze Bild werden z.B. jeweils die linken oder die der rechten Nachbarn der Pixel verwendet. Auf diese Weise werden für das gesamte Bild, außer einer Randspalte, oder -zeile, Kreuzkorrelationskoeffizienten bestimmt. Diese werden von der 3D-Form der Oberfläche moduliert.

Die beschriebenen Möglichkeiten der Reduzierung der Informationsmenge sind auf die angegebenen Möglichkeiten nicht beschränkt, sondern auch andere Verfahrensweisen können angewendet werden.

Für die Art der vom Assoziativspeicher zu bearbeitenden Daten gibt es insgesamt folgende Möglichkeiten:
Als Eingangsdaten werden eine der beschriebenen Matrizen der charakteristischen Zahlen verwendet: Pro Pixel ein Phasenwert, ein Korrelationswert oder eine andere geeignete charakteristische Zahl.

Jede dieser beschriebenen Matrizen beschreibt implizit die 3D-Form der zu prüfenden Oberfläche. Durch den Assoziativspeicher wird nun die entsprechende Matrix auf folgende Art modifiziert: Es wird eine Matrix erzeugt, die von dem Prüfteil stammen könnte, wenn es keine Fehlstellen der Oberflächenform enthalten würde. Es hat die gleiche Form und die gleiche Lage wie das Prüfteil und wird als virtuelles Masterteil bezeichnet.

Nun muss lediglich die Differenz der beiden Matrizen gebildet werden. In der Ergebnismatrix liegen die Fehlstellen vor, die allerdings vom Messrauschen überlagert sind. Fehlstellen, die größer als das Messrauschen sind können somit durch einfache Schwellwertbildung extrahiert werden.

Für diese Fehlstellen kann dann in an sich bekannter Weise die Position auf der Oberfläche bzw. die 3D-Koordinaten berechnet werden.

### Zur Trainingsphase:

In dieser Phase erfolgt die spezielle auf die Messobjekte bezogene Konfiguration des Assoziativspeichers.

Das "Training" wird mit Hilfe der, impliziten, 3D-Daten von fehlerfreien Masterteilen durchgeführt. Diese Daten müssen dergleichen Art sein wie die in der Recallphase, nämlich Grauwerte oder charakteristische Zahlen der Grauwertfolgen. Durch das Training werden die Gewichtsfaktoren eingestellt bzw. abgestimmt.

Bei günstig abgestimmten Gewichten/Wichtungsfaktoren ist der Assoziativspeicher in der Lage, aus den Daten eines Prüfteiles die Daten des zugehörigen virtuellen Masterteils zu erzeugen.

## Patentansprüche

1. Verfahren zur Erkennung von Abweichungen der Oberflächenform von einer vorgegebenen Form durch eine Messwerterfassung und eine nachfolgende Verarbeitung mit einem künstlichen neuronalen Netz, bei dem
- Muster auf die Objektoberfläche projiziert und Bilder mit einer Matrixkamera aufgenommen werden, wobei
- die Matrixkamera in an sich bekannter Weise einen Satz von n zeitlich aufeinanderfolgenden Bildern erzeugt, wobei zwischen den Bildaufnahmen das projizierte Muster um vorgegebene Werte verschoben und/oder gedreht und/oder die Struktur des Musters verändert wird,
- aus den je n Grauwerten einer Grauwertfolge der einzelnen Pixel der von der Matrixkamera aufgenommenen n Bilder eine Zahl oder wenige <n Zahlen bestimmt wird/werden, die charakteristisch für die Grauwertfolge des jeweiligen Pixels oder für die Grauwertfolge des Pixels in Relation zu einer Grauwertfolge oder mehreren Grauwertfolgen anderer Pixel ist/sind,
- nach Eingabe der Matrix der aus den Bilddaten ermittelten charakteristischen Zahlen des Prüfobjektes in das neuronale Netz ein Recall des neuronalen Netzes erfolgt
- als signifikante Daten für die Fehler des Prüfobjektes der Vergleich zwischen der Matrix der aus den Bilddaten ermittelten charakteristischen Zahlen des Prüfobjektes und den Recalldaten des neuronalen Netzes verwendet wird, **dadurch gekennzeichnet, dass**
- für jedes Pixel des Sensors der Matrixkamera aus den zugehörigen Grauwerten in an sich bekannter Weise ein Phasenwert berechnet wird und die so gewonnene Matrix als Eingangsdatei für das künstliche neuronale Netz verwendet wird, oder
- für jedes Pixel des Sensors der Matrixkamera ein Ähnlichkeitsmaß zwischen den Grauwerten des ausgewählten Pixels und den Grauwerten eines anderen Pixels mit einem festgelegten Abstand zum ausgewählten Pixel bestimmt wird und die so gewonnene Matrix als Eingangsdatei für das künstliche neuronale Netz verwendet wird, oder
- für jedes Pixel des Sensors der Matrixkamera ein Ährtlichkeitsmaß zwischen den Grauwerten des ausgewählten Pixels und den Grauwerten eines benachbarten Pixels wird und die so gewonnene Matrix als Eingangsdatei für das künstliche neuronale Netz verwendet wird.

2. Verfahren nach Anspruch 1, **dadurch gekennzeichnet, dass**
als Ähnlichkeitsmaß der Kreuzkorrelationskoeffizient verwendet wird.

3. Verfahren nach den Ansprüchen 1 und 2, **dadurch gekennzeichnet, dass**
als Ähnlichkeitsmaß die Summe der Fehlerquadrate verwendet wird.

4. Verfahren nach einem der Ansprüche 1 bis 3, **dadurch gekennzeichnet, dass**
das neuronale Netz aus drei linearen Schichten besteht.

5. Verfahren nach Anspruch 1, **dadurch gekennzeichnet, dass**
die Berechnung des Phasenwertes nach dem Phasenshiftverfahren erfolgt.

## Claims

1. Method of recognizing deviations in the surface structure from a predetermined structure by the detection of measurement values and subsequent processing by way of an artificial neuronal net, in which patterns are projected onto the object surface and images are recorded with a matrix camera, whereby the matrix camera generates in a known manner a set of n sequential images, while between the image acquisitions the projected pattern is shifted and/or rotated and/or the structure of the pattern is changed by predetermined values, from the n grey values of a grey value sequence of the individual pixels of the n images recorded by the matrix camera, a number or a few numbers <n is/are determined, which is/are characteristic for the grey value sequence of the relevant pixel or the grey value sequence of the pixel in relation to a grey value sequence or several grey value sequences of other pixels, after input of the matrix of the characteristic numbers derived from the image data of the object tested into the neuronal net a recall of the neuronal net takes place, with the comparison between the image data or the matrix of the characteristic numbers of the object tested calculated from the image data and the recall data of the neuronal net being used as the significant data for the defects of the object tested, **characterized in that**
- for every pixel of the sensor of the matrix camera a phase value is calculated in a known manner from the associated grey values and the matrix thus created is used as input data for the artificial neuronal net, or
- for every pixel of the sensor of the matrix camera a similarity measure between the grey values of the selected pixel and the grey values of another pixel at a specified distance to the selected pixel is calculated and the matrix thus created is used as input data for the artificial neuronal net, or
- for every pixel of the sensor of the matrix camera a similarity measure between the grey values of the selected pixel and the grey values of a neighbouring pixel is calculated and the matrix thus created is used as input data for the artificial neuronal net.

2. Process in accordance with Claim 1, **characterized in that**
the cross-correlation coefficient is used as the similarity measure.

3. Process in accordance with Claims 1 and 2, **characterized in that**
the sum of the squares of the errors is used as the similarity measure.

4. Process in accordance with one of the Claims 1 to 3, **characterized in that**
the neuronal net consists of three linear layers.

5. Process in accordance with Claim 1, **characterized in that**
the calculation of the phase value is in accordance with the phase shift method.

## Revendications

1. Procédé permettant d'identifier les écarts de la forme de surface par rapport à une forme donnée au moyen d'un enregistrement des valeurs de mesure et d'un traitement subséquent à l'aide d'un réseau neuronal artificiel, par lequel les modèles sont projetés sur la surface de l'objet et les images enregistrées au moyen d'une caméra matricielle, la caméra matricielle produisant une série d'images successives par un moyen connu, le modèle projeté entre les prises de vues étant décalé selon les valeurs prescrites tourné et/ou la structure du modèle étant modifiée, à partir desquelles est/sont déterminé(s) un nombre ou plusieurs nombres <n, représentatifs de la séquence des valeurs de gris du pixel correspondant ou de la séquence des valeurs de gris du pixel associé à une séquence des valeurs de gris ou à plusieurs séquences de valeurs de gris d'autres pixels, selon les valeurs de gris n, une séquence de valeurs de gris, les différents pixels des images n réalisées par la caméra matricielle, un rappel du réseau neuronal étant effectué après entrée de la matrice des nombres caractéristiques de l'objet d'essai, déterminés à partir des données d'images, dans le réseau neuronal, lorsque des données significatives sont utilisées pour les erreurs de l'objet d'essai de la comparaison entre les données d'images ou la matrice des nombres caractéristiques de l'objet d'essai, déterminés à partir des données d'images, et les données de rappel du réseau neuronal, **caractérisé par le fait que**
- une valeur de phase étant calculée par un moyen connu pour chaque pixel du capteur de la caméra matricielle à partir des valeurs de gris correspondantes et la matrice ainsi obtenue servant de fichier d'entrée pour le réseau neuronal artificiel ou
- une mesure de similitude entre les valeurs de gris du pixel sélectionné et les valeurs de gris d'un autre pixel étant déterminée pour chaque pixel du capteur de la caméra matricielle avec un intervalle défini par rapport au pixel sélectionné et la matrice ainsi obtenue servant de fichier d'entrée pour le réseau neuronal artificiel ou
- une mesure de similitude entre les valeurs de gris du pixel sélectionné et les valeurs de gris d'un pixel voisin étant déterminée pour chaque pixel du capteur de la caméra matricielle et la matrice ainsi obtenue servant de fichier d'entrée pour le réseau neuronal artificiel.

2. Procédé conformément à la revendication n°1, **caractérisé par le fait que** le coefficient d'intercorrélation sert de mesure de similitude.

3. Procédé conformément aux revendications n°1 et n°2, **caractérisé par le fait que** la somme des carrés des erreurs sert de mesure de similitude.

4. Procédé conformément à l'une des revendications n°1 à n°3, **caractérisé par le fait que** le réseau neuronal est composé de trois couches linéaires.

5. Procédé conformément à la revendication n°1, **caractérisé par le fait que** le calcul de la valeur de phase s'effectue suivant le procédé de changement de phases.
